# EUROPEAN PATENT APPLICATION

(11) **EP 4 729 269 A1**
(43) Date of publication of application: **22.04.2026**
(21) Application number: 25208377.9
(22) Date of filing: 13.10.2025
(51) Int. Cl.: B29C 45/14, B29C 33/52, B28B 1/24, B28B 7/34, F01D 5/28, C04B 35/80

(54) **PLASTIC ENCASED CARBONACEOUS FOAM MANDREL AND METHOD**

(30) Priority: 15.10.2024 US 202418916123
(71) Applicant: RTX Corporation, Farmington, CT 06032 (US)
(72) Inventor: DWYER, John A., Colchester, 06415 (US)
(74) Representative: Dehns

(57) **Abstract**

A plastic encased mandrel includes an open cell carbonaceous foam that is shaped to correspond to a core of a ceramic matrix composite (CMC) part. A polyvinyl butyral (PVB) plastic is injection molded into the carbonaceous foam, before or after shaping, to encase the carbonaceous foam core and form an encased mandrel. The open cell carbonaceous foam may be silicon carbide (SiC) foam or reticulated vitreous carbon (RVC) foam. The foam core may be incorporated into the CMC part when SiC foam is used for better distribution of thermal and structural loads or the foam core may be removed from the CMC part when RVC foam is used, such as when a CMC vane incorporates a metal spar.

## Description

### FIELD OF THE INVENTION

The subject matter disclosed herein relates to mandrels, such as used for forming ceramic matrix composite (CMC) parts and, in particular, to plastic-encased carbonaceous foam mandrels.

### BACKGROUND OF THE INVENTION

During the manufacture of a ceramic matric composite (CMC) part such as a turbine vane, the interior of the airfoil section or core is typically shaped by a mandrel. This mandrel can be braided around or wrapped with CMC preform fabric. During the densification portion of a manufacturing process, a specially machined piece of graphite is usually used as the mandrel. The purpose of the mandrel during this phase is to hold the shape of the core, while allowing the chemical vapor infiltration (CVI) gasses to infiltrate into the interior material through specially machined slots on the mandrel.

The mandrel may have to be designed in two or three parts to be inserted fully into the core cavity, due to the complex geometry of the airfoil. Graphite mandrels are typically quite fragile and may be damaged during extraction. Given the cost associated with the manufacture of the graphite mandrel, they are meant to be reusable and therefor should be removable post densification without breaking. However, given the small size and fragility of the graphite material, it can be difficult if not impossible to remove such mandrels without scrapping the part or necessitating the destruction of the mandrel.

Silicon carbide (SiC) foam is a material made of silicon carbide, with an open pore structure. It comes in a variety of pore densities and is the same material as is used in CMC perform fabric. It is also machinable and able to hold shape under the mild pressures involved in the preforming process.

Reticulated vitreous carbon (RVC) foam is a material made of carbon, with an open pore structure. It comes in a variety of pore densities and is chemically compatible with the densification process used for forming CMC parts. It is also machinable and able to hold shape under the mild pressures involved in the preforming process.

The above information disclosed in this Background section is only for understanding of the background of the inventive concepts and, therefore, it may contain information that does not constitute prior art.

### SUMMARY OF THE INVENTION

The present disclosure is directed, in a first aspect, to a mandrel having a carbonaceous foam core shaped to correspond to a core of a ceramic matrix composite (CMC) part, wherein the carbonaceous foam is an open cell foam, and a plastic injected molded into the carbonaceous foam core to encase the carbonaceous foam core and form an encased mandrel, wherein the plastic comprises polyvinyl butyral (PVB) plastic.

In an example of the mandrel, the carbonaceous foam core may be made of silicon carbide (SiC) foam.

In another example of the mandrel, the SiC foam may have a pore density between 20 pores-per-inch (ppi) and 100 ppi.

In a further example of the mandrel, the carbonaceous foam core may be made of reticulated vitreous carbon (RVC) foam.

In yet another example of the mandrel, the RVC foam may have a pore density between 20 pores-per-inch (ppi) and 100 ppi.

The present disclosure is also directed, in a second aspect, to a method that includes machining or otherwise shaping a carbonaceous foam core to correspond to a core of a ceramic matrix composite (CMC) part, wherein the carbonaceous foam core is an open cell foam, positioning the carbonaceous foam core in an injection mold, and injection molding a plastic into the carbonaceous foam core to encase the carbonaceous foam core to form an encased mandrel, wherein the plastic comprises polyvinyl butyral (PVB) plastic.

In an example of the method, the carbonaceous foam core may be a silicon carbide (SiC) foam core so as to form an encased SiC mandrel.

In another example of the method, the SiC foam core may have a pore density between 20 pores-per-inch (ppi) and 100 ppi.

In a further example, the method may further include braiding or wrapping the encased SiC mandrel with preform CMC material to form a preform of the CMC part, melting or burning the PVB plastic, and incorporating the SiC foam core into the CMC part during densification, wherein the open pores of the SiC foam core permit infiltration of chemical vapor infiltration (CVI) gas.

In yet another example of the method, the carbonaceous foam core may be a reticulated vitreous carbon (RVC) foam core so as to form an encased RVC mandrel.

In an example of the method, the RVC foam core may have a pore density between 20 pores-per-inch (ppi) and 100 ppi.

In another example, the method may further include braiding or wrapping the encased RVC mandrel with preform CMC material to form a preform of the CMC part, melting or burning the polyvinyl butyral plastic, densifying the CMC part, wherein the open pores of the RVC foam core permit infiltration of chemical vapor infiltration (CVI) gas, and removing the RVC foam core.

In a further example, the method may also include reusing the removed RVC foam core by injection molding polyvinyl butyral plastic into the removed RVC foam core to encase the removed RVC foam core to form another encased RVC mandrel.

The present disclosure is further directed, in a third aspect, to a method that includes positioning a carbonaceous foam material in an injection mold, injection molding a plastic into the carbonaceous foam material to encase the carbonaceous foam material, wherein the carbonaceous foam material is an open cell foam and the plastic includes a polyvinyl butyral (PVB) plastic, and machining or otherwise shaping the encased carbonaceous foam material to correspond to a core of a ceramic matrix composite (CMC) part.

In an example of the method, the carbonaceous foam core may be a silicon carbide (SiC) foam core so as to form an encased SiC mandrel.

In another example of the method, the SiC foam core may have a pore density between 20 pores-per-inch (ppi) and 100 ppi.

In an example, the method may further include braiding or wrapping the encased SiC mandrel with preform CMC material to form a preform of the CMC part, melting or burning the polyvinyl butyral plastic, and incorporating the SiC foam core into the CMC part during densification, wherein the open pores of the SiC foam core permit infiltration of chemical vapor infiltration (CVI) gas.

In another example of the method, the carbonaceous foam core may be a reticulated vitreous carbon (RVC) foam core so as to form an encased RVC mandrel.

In a further example of the method, the RVC foam core may have a pore density between 20 pores-per-inch (ppi) and 100 ppi.

In yet another example, the method may further include braiding or wrapping the encased RVC mandrel with preform CMC material to form a preform of the CMC part, melting or burning the polyvinyl butyral plastic, densifying the CMC part, wherein the open pores of the RVC foam core permit infiltration of chemical vapor infiltration (CVI) gas, and removing the RVC foam core.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a schematic view of a block of carbonaceous foam material usable with the present disclosure;
FIG. 2A is a schematic view of a carbonaceous foam material that has been shaped into a carbonaceous foam core in accordance with the present disclosure;
FIG. 2B is a schematic view of a carbonaceous foam core of FIG. 2A that has been encased in polyvinyl butyral (PVB) plastic to form an encased mandrel in accordance with the present disclosure;
FIG. 3A is a schematic view of a block of carbonaceous foam material of FIG. 1 that has been encased in polyvinyl butyral (PVB) plastic in accordance with the present disclosure;
FIG. 3B is a view of encased carbonaceous foam of FIG. 3A that has been shaped to form an encased mandrel in accordance with the present disclosure;
FIG. 4 is a flow diagram of an example method in accordance with the present disclosure;
FIG. 5 is a flow diagram of another example method in accordance with the present disclosure; and
FIG. 6 is a flow diagram of yet another example method in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present disclosure is directed to an encased mandrel for use in fabrication of ceramic matric composite (CMC) parts such as turbine vanes that has advantages over current graphite mandrels used for such purposes. The encased mandrel uses a carbonaceous foam core that is injection molded with polyvinyl butyral plastic. Such an encased mandrel may be produced easier and cheaper than current graphite mandrels. When a SiC foam core is used, the SiC foam core may be incorporated into the CMC part for better distribution of thermal and structural loads. When an RVC foam core is used, the RVC foam core may be removed from the CMC part, such as when a CMC vane incorporates a metal spar.

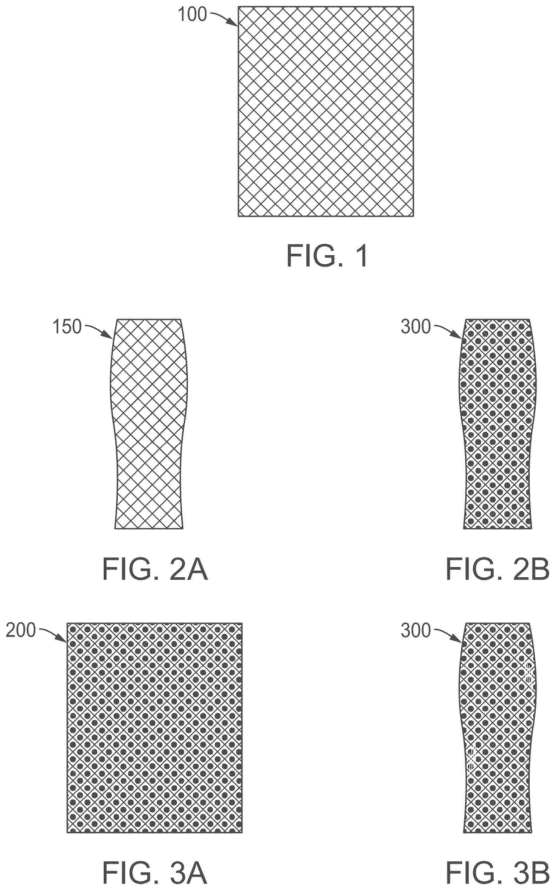

Referring to FIGS. 1, 2A and 2B, in one or more embodiments of the present disclosure, a carbonaceous foam core 150 is shaped from a block or portion of carbonaceous foam material 100. The shape of carbonaceous foam core 150 corresponds to a core of a CMC part such as a vane.

The carbonaceous foam material 100 as used herein is an open cell foam. In one or more embodiments, the carbonaceous foam material 100 may be silicon carbide (SiC) foam. In one or more other embodiments, the carbonaceous foam material 100 may be reticulated vitreous carbon (RVC) foam.

The carbonaceous foam material 100 may have a pore density in a range of about 20 pores-per-inch (ppi) to about 100 ppi (0.79 pores per mm to 3.94 pores per mm). The selected pore density may be determined based upon one or more factors. The pore density should provide a sufficient number of contact points and have sufficient rigidity/strength to adequately support a preform during densification and permit sufficient flow of chemical vapor infiltration (CVI) gas. In certain embodiments wherein the carbonaceous foam material 100 is incorporated into the final CMC part, such as when SiC foam is used, the pore density may be chosen to provide for a predetermined amount of cooling air flow and/or a desired amount of metering of the cooling air.

In accordance with the present disclosure, a plastic is injected molded into the carbonaceous foam core 150 to encase the carbonaceous foam core 150 and form an encased mandrel 300. The plastic is polyvinyl butyral (PVB) plastic, which is compatible with the materials and processes of densification and CVI used to form a CMC part. The PVB plastic melts and/or burns away without adversely affecting the processes or resulting CMC part. The PVB plastic further provides sufficient rigidity and dimensional accuracy to the encased mandrel to permit the braiding or wrapping of preform CMC material.

Thus, in one or more embodiments, the PVB plastic may encase the carbonaceous foam material 100 after it has been shaped into a carbonaceous foam core 150. The carbonaceous foam core 150 may be shaped in any suitable means, including machining, laser-cutting, [insert additional carbon foam shaping technologies] In such an embodiment, the carbonaceous foam core 150 having a suitable shape may be positioned in an injection mold having the desired shape of the mandrel, and PVB plastic may be injected into the mold to fill and encase the carbonaceous foam core 150 so as to form an encased mandrel.

Referring to FIGS. 1, 3A, and 3B, in one or more embodiments, the PVB plastic may encase the carbonaceous foam material 100 before shaping to form an encased blank 200, which may subsequently be shaped, such as by machining. The present disclosure is not limited to machining, and other suitable technology, such as laser-cutting, [insert additional shaping technologies].

In such embodiments, the carbonaceous foam material 100 may be positioned in an injection mold, and PVB plastic may be injected into the mold to fill and encase the carbonaceous foam material 100 so as to form the encased blank 200 used to form the encased mandrel 300.

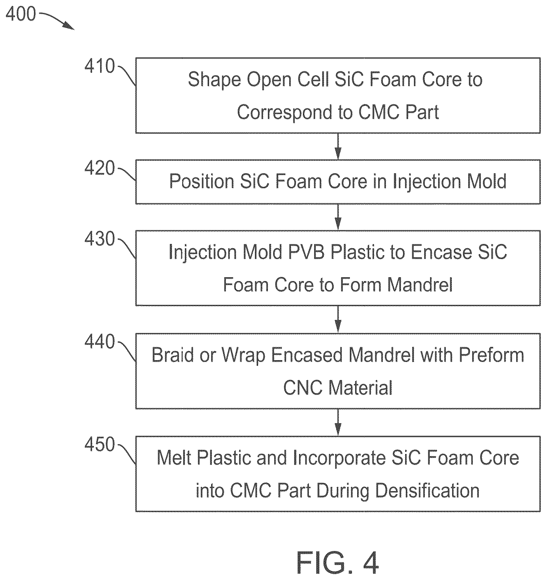

Referring to FIG. 4, an exemplary method 400 is disclosed, wherein the carbonaceous foam material 100 of FIG. 1 is a SiC foam material 100 that is formed into a SiC foam core 150 of FIG. 2A which is incorporated into the CMC part during densification.

Method 400 begins with a step 410 that includes machining or otherwise shaping the SiC foam core 150 from the SiC foam material 100, which is an open cell foam, to correspond to a core of a CMC part. The SiC foam core 150 may have a pore density between about 20 ppi and 100 ppi (0.79 pores per mm to 3.94 pores per mm).

In a next step 420, the SiC foam core 150 is positioned in an injection mold (not shown). The injection mold is shaped and dimensioned to correspond to the final shape of the encased mandrel and the SiC foam core 150 should conform closely to the injection mold walls and have sufficient contact points to provide support to a preform during densification after the plastic has melted and/or burned off as well as have eventual contact points that contact the preform so as to be incorporated into the CMC part.

In step 430, PVB plastic is injection molded into the mold to encase the SiC foam core 150 and form the encased mandrel 300.

In a next step 440, the encased mandrel 300 may be braided or wrapped with preform CMC material to form a preform of the CMC part. At step 450, the PVB plastic is melted and/or burned off and the SiC foam core 150 that remains may be incorporated into the CMC part during densification, wherein the open pores of the SiC foam core 150 permit infiltration of chemical vapor infiltration (CVI) gas.

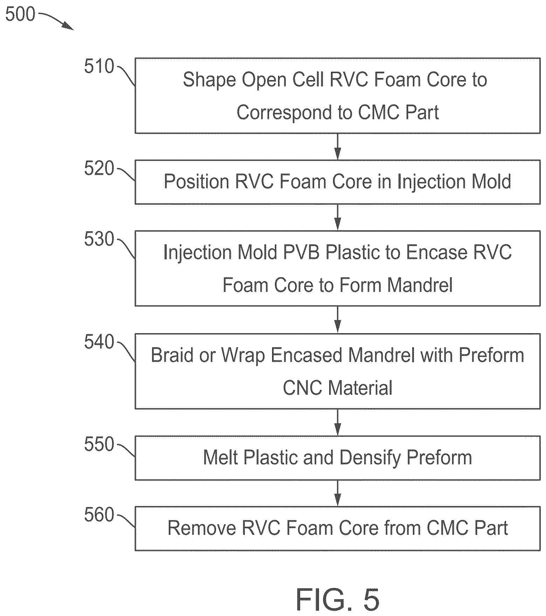

Referring to FIG. 5, another exemplary method 500 is disclosed, wherein the carbonaceous foam material 100 of FIG. 1 is an RVC foam material 100 that is formed into an RVC foam core 150 of FIG. 2A which is incorporated into the CMC part during densification.

Method 500 begins with a step 510 that includes machining or otherwise shaping the open cell RVC foam core 150 from the RVC foam material 100 to correspond to a core of a CMC part. The RVC foam core 150 may have a pore density between about 20 ppi and 100 ppi.

In a next step 520, the RVC foam core 150 is positioned in an injection mold (not shown). As with method 400, injection mold in method 500 is shaped and dimensioned to correspond to the final shape of the encased mandrel and the RVC foam core 150 should conform closely to the injection mold walls and have sufficient contact points to provide support to a preform during densification after the plastic has melted and/or burned off.

In step 530, PVB plastic is injection molded into the mold to encase the RVC foam core 150 and form the encased mandrel 300.

In a next step 540, the encased mandrel 300 may be braided or wrapped with preform CMC material to form a preform of the CMC part. At step 550, the PVB plastic is melted and/or burned off and the preform of the CMC part is densified, wherein the open pores of the RVC foam core 150 permit infiltration of chemical vapor infiltration (CVI) gas.

In step 560, the RVC foam core 150 may be removed from the CMC part for reuse. The RVC foam core 150 is less fragile than prior art graphite mandrels and is easier to remove.

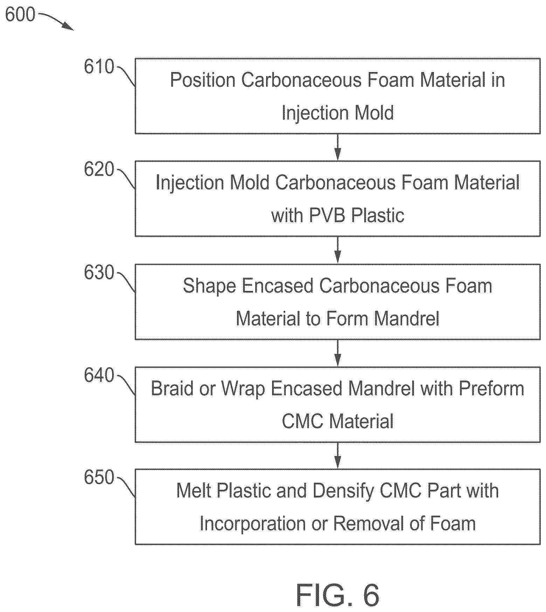

Referring to FIG. 6, an exemplary method 600 is disclosed, wherein the carbonaceous foam material 100 of FIG. 1 is injection molded with PVB plastic to encase the carbonaceous foam material 100 before shaping to form an encased blank 200, which may subsequently be shaped, such as by machining. The present disclosure is not limited to machining, and other suitable technology.

Method 600 begins with a step 610 that includes positioning the carbonaceous foam material 100, whether it be SiC foam, RVC foam, or another carbonaceous foam material with open cells, into an injection mold. In this embodiment, the injection mold does not need to match the shape of the foam material 100 as closely since material will be subsequently removed therefrom.

In a next step 620, the carbonaceous foam material 100 is injection molded with PVB plastic to form an encased blank 200.

In step 630, the encased carbonaceous foam material 100 of blank 200 is machined or otherwise shaped to correspond to a core of a CMC part and form an encased mandrel 300.

In a next step 640, the encased mandrel 300 may be braided or wrapped with preform CMC material to form a preform of the CMC part.

At step 650, the PVB plastic is melted and/or burned off and the carbonaceous core 150 that remains may be either be incorporated into the CMC part during densification, wherein the open pores of the carbonaceous foam core 150 permit infiltration of chemical vapor infiltration (CVI) gas, or the carbonaceous foam core 150 may be removed. When the carbonaceous foam core 150 is removed, it may be reused.

Reusing the removed carbonaceous foam core 150 may include, for example, injection molding polyvinyl butyral plastic into the removed carbonaceous foam core 150 to encase the removed carbonaceous foam core 150 to form another encased mandrel 300.

In certain embodiments of the present disclosure, the carbonaceous foam core 150 may be removed destructively and not reused. In such cases, highly twisted and/or curving mandrels may be used with the carbonaceous foam core 150 remaining after densification being destructively removed without damaging the resulting CMC part.

In one or more embodiments of the present disclosure, the melting and/or burning of the plastic allows the open cell carbonaceous foam core 150 to permit greater infiltration of CVI gas than the machined passages of the prior art graphite mandrels.

In one or more embodiments of the present disclosure, an encased mandrel 300 can be formed at lower cost. In further embodiments of the present disclosure, the foam core 150 elements of the present encased mandrel may be easier to remove after use and may be reused, further lowering costs.

In one or more embodiments of the present disclosure, the SiC foam core 150 elements of the present encased mandrel may be incorporated into the CMC part so as to strengthen the part and/or provide cooling air flow passage and/or metering.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A mandrel, comprising:
a carbonaceous foam core (150) shaped to correspond to a core of a ceramic matrix composite (CMC) part and comprising a carbonaceous foam (100), wherein the carbonaceous foam (100) is an open cell foam (100); and
a plastic injection molded into the carbonaceous foam core (150) to encase the carbonaceous foam core (150) and form an encased mandrel (300), wherein the plastic comprises polyvinyl butyral (PVB) plastic.

2. The mandrel of claim 1, the carbonaceous foam core (150) comprises silicon carbide (SiC) foam (100).

3. The mandrel of claim 2, wherein the SiC foam (100) has a pore density between 20 pores-per-inch (ppi) and 100 ppi (0.79 pores per mm to 3.94 pores per mm).

4. The mandrel of claim 1, wherein the carbonaceous foam core (150) comprises reticulated vitreous carbon (RVC) foam (100).

5. The mandrel of claim 4, wherein the RVC foam (100) has a pore density between 20 pores-per-inch (ppi) and 100 ppi (0.79 pores per mm to 3.94 pores per mm).

6. A method, comprising:
machining or otherwise shaping a carbonaceous foam core (150) to correspond to a core of a ceramic matrix composite (CMC) part, wherein the carbonaceous foam core (150) is an open cell foam;
positioning the carbonaceous foam core (150) in an injection mold; and
injection molding a plastic into the carbonaceous foam core (150) to encase the carbonaceous foam core (150, 300) to form an encased mandrel (300), wherein the plastic comprises polyvinyl butyral (PVB) plastic.

7. A method, comprising:
positioning a carbonaceous foam material (100) in an injection mold;
injection molding a plastic into the carbonaceous foam material (100) to encase the carbonaceous foam material (100, 200), wherein the carbonaceous foam material (100) is an open cell foam and the plastic includes a polyvinyl butyral (PVB) plastic; and
machining or otherwise shaping the encased carbonaceous foam material (200) to correspond to a core of a ceramic matrix composite (CMC) part.

8. The method of claim 6 or 7, the carbonaceous foam core (150) comprises silicon carbide (SiC) foam core (150) so as to form an encased SiC mandrel (300).

9. The method of claim 8, wherein the SiC foam core (150) has a pore density between 20 pores-per-inch (ppi) and 100 ppi (0.79 pores per mm to 3.94 pores per mm).

10. The method of claim 9, further comprising:
braiding or wrapping the encased SiC mandrel (300) with preform CMC material to form a preform of the CMC part;
melting or burning the PVB plastic; and
incorporating the SiC foam core (150) into the CMC part during densification, wherein the open pores of the SiC foam core (150) permit infiltration of chemical vapor infiltration (CVI) gas.

11. The method of claims 6 or 7, wherein the carbonaceous foam core (150) comprises a reticulated vitreous carbon (RVC) foam core (150) so as to form an encased RVC mandrel (300).

12. The method of claim 11, wherein the RVC foam core (150) has a pore density between 20 pores-per-inch (ppi) and 100 ppi (0.79 pores per mm to 3.94 pores per mm).

13. The method of claim 12, further comprising:
braiding or wrapping the encased RVC mandrel (300) with preform CMC material to form a preform of the CMC part;
melting or burning the polyvinyl butyral plastic;
densifying the CMC part, wherein the open pores of the RVC foam core (150) permit infiltration of chemical vapor infiltration (CVI) gas; and
removing the RVC foam core (150).

14. The method of claim 13, further comprising reusing the removed RVC foam core (150) by injection molding polyvinyl butyral plastic into the removed RVC foam core (150) to encase the removed RVC foam core (150) to form another encased RVC mandrel (300).
